# EUROPEAN PATENT SPECIFICATION

(11) **EP 2 979 189 B1**
(45) Date of publication and mention of the grant of the patent: **25.12.2019**
(21) Application number: 13879895.4
(22) Date of filing: 28.03.2013
(51) Int. Cl.: G06F 12/0804, G06F 3/06

(54) **STORING DATA FROM CACHE LINES TO MAIN MEMORY BASED ON MEMORY ADDRESSES**
SPEICHERUNG VON DATEN AUS CACHE-ZEILEN IN EINEM HAUPTSPEICHER AUF BASIS VON SPEICHERADRESSEN
STOCKAGE DE DONNÉES PROVENANT DE LIGNES DE MÉMOIRE CACHE DANS UNE MÉMOIRE PRINCIPALE SUR LA BASE D'ADRESSES DE MÉMOIRE

(43) Date of publication of application: 03.02.2016
(73) Proprietor: Hewlett Packard Enterprise Development LP, Houston, TX 77070 (US)
(72) Inventor: FARABOSCHI, Pablo, E-08174 Sant Cugat del Valles (ES); BOEHM, Hans, Palo Alto, California 94304-1100 (US); CHAKRABARTI, Dhruva, Palo Alto, California 94304-1100 (US); MURALIMANOHAR, Naveen, Palo Alto, California 94304-1100 (US)
(74) Representative: Fleuchaus, Michael A.
(86) International application number: PCT/US2013/034261
(87) International publication number: WO 2014/158156

(56) References cited:
- JP-A- 2012 128 842
- US-A1- 2011 066 790
- US-A1- 2011 066 790
- US-A1- 2011 099 337
- US-A1- 2011 138 124
- US-A1- 2011 138 124
- US-A1- 2013 042 076
- US-B1- 6 658 533
- US-B2- 7 472 230

## Description

### BACKGROUND

In typical computing systems, a cache memory can be used by a central processing unit (CPU) to reduce the time it takes to access memory, e.g., main memory. When the CPU needs to access data from a location in the main memory (such as read data from the main memory or write data to the main memory), the CPU can check whether a copy of that data is in the cache. If the copy of the data is stored in the cache, the CPU can access the copy of the data from the cache, which is much faster than the CPU accessing the main memory for the same data. The data stored in cache can also be written back or flushed to the main memory for data coherency.

US 2011/0138124 A1 relates to a trace mode for a cache memory system.

US 2011/0066790 A1 describes a main memory with a combination of non-volatile and dynamic random access memory.

US 7,472,230 B2 describes a pre-emptive write back controller that can be used for a cache or main memory.

US 6,658,533 B1 describes a method and apparatus for write cache flush and fill mechanisms.

### BRIEF DESCRIPTION OF THE DRAWINGS

FIG. 1 illustrates an example system for writing back data based on addresses of a main memory.
FIG. 2 illustrates an example method for writing back data based on addresses of a main memory.
FIG. 3 illustrates another example method for writing back data based on addresses of a main memory.

The invention is set out in the appended claims. Advantageous embodiments are defined by the appended dependent claims. The embodiments or examples of the following description which are not covered by the appended claims are considered as not being part of the invention according to this description.

### DETAILED DESCRIPTION

Examples described herein provide for transferring data from a cache memory to a main memory using identification of cache lines based on memory addresses. Still further, a system is provided to enable data stored in cache to be stored in or written back to a main memory based on one or more specified ranges of addresses of the main memory. In one example, a processor can execute cache instructions that specify a range of addresses of the main memory, and based on the range of addresses, the processor can perform memory operations for the cache lines corresponding to the range of addresses. Memory operations can include, for example, flushing or storing data from cache lines to respective locations in the main memory.

According to an example, a processor can determine that at least a portion of data stored in a cache memory of the processor is to be stored in or written to a main memory. The processor determines one or more ranges of addresses of the main memory. The one or more ranges of addresses can correspond to a plurality of cache lines in the cache memory. Depending on implementation, the processor can identify a set of cache lines corresponding to addresses in the one or more ranges of addresses, so that data stored in the identified set can be stored in the main memory. For each cache line of the identified set having data that has been modified since that cache line was first loaded to the cache memory or since a previous store operation, data stored in that cache line is caused to be stored in or written back to the main memory.

In another implementation, the processor can provide the one or more ranges of addresses to the cache memory to enable the cache memory to identify the set of cache lines corresponding to addresses in the one or more ranges of addresses, so that data stored in the identified set can be stored in the main memory.

Still further, a method is provided for performing memory operations in a computing system. The method includes identifying a set of cache lines sufficiently general to describe sets of multiple cache lines (but less than the entire cache). Data stored in the sets of multiple cache lines can be written to a main memory. In some examples, the set of cache lines can be identified using one or more ranges of addresses of the main memory, where the ranges of addresses are determined from cache instructions that are executed by a processor of the computing system. The computing system can force write back of data stored in such cache lines to the main memory. In this manner, multiple cache lines (but less than the entire cache) can be identified to have their stored data flushed to the main memory, rather than, for example, a single cache line or the entire cache.

Depending on variations, the main memory can correspond to a non-volatile memory. In other examples, the main memory can correspond to non-volatile memory and volatile memory. For example, the non-volatile memory can have a first address range while the volatile memory can have a second address range, where the address ranges do not overlap. The determined one or more range of addresses can be within the first address range (e.g., corresponding to the non-volatile memory portion), so that data stored in cache lines corresponding to addresses in the non-volatile memory can be stored in the non-volatile memory instead of the volatile memory.

One or more examples described herein provide that methods, techniques, and actions performed by a computing device are performed programmatically, or as a computer-implemented method. Programmatically, as used herein, means through the use of code or computer-executable instructions. These instructions can be stored in one or more memory resources of the computing device. A programmatically performed step may or may not be automatic.

One or more examples described herein can be implemented using programmatic modules, engines, or components. A programmatic module, engine, or component can include a program, a sub-routine, a portion of a program, or a software component or a hardware component capable of performing one or more stated tasks or functions. As used herein, a module or component can exist on a hardware component independently of other modules or components. Alternatively, a module or component can be a shared element or process of other modules, programs or machines.

Some examples described herein can generally require the use of computing devices, including processing and memory resources. For example, one or more examples described herein may be implemented, in whole or in part, on computing devices such as servers, desktop computers, cellular or smartphones, laptop computers, printers, digital picture frames, network equipments (e.g., routers), and tablet devices. Memory, processing, and network resources may all be used in connection with the establishment, use, or performance of any example described herein (including with the performance of any method or with the implementation of any system).

Furthermore, one or more examples described herein may be implemented through the use of instructions that are executable by one or more processors. These instructions may be carried on a computer-readable medium. Machines shown or described with figures below provide examples of processing resources and computer-readable mediums on which instructions for implementing examples described herein can be carried and/or executed. In particular, the numerous machines shown with examples described herein include processor(s) and various forms of memory for holding data and instructions. Examples of computer-readable mediums include permanent memory storage devices, such as hard drives on personal computers or servers. Other examples of computer storage mediums include portable storage units, such as CD or DVD units, flash memory (such as carried on smartphones, multifunctional devices or tablets), and magnetic memory. Computers, terminals, network enabled devices (e.g., mobile devices, such as cell phones) are all examples of machines and devices that utilize processors, memory, and instructions stored on computer-readable mediums. Additionally, examples may be implemented in the form of computer-programs, or a computer usable carrier medium capable of carrying such a program.

### SYSTEM DESCRIPTION

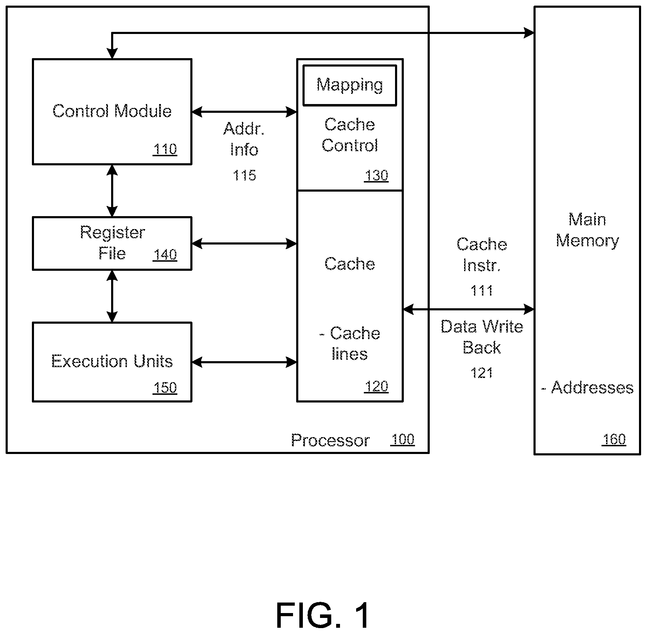

FIG. 1 illustrates an example system for storing data based on addresses of a main memory. A computing system, such as illustrated in FIG. 1, can include one or more processors and one or more main memory. For illustrative purposes, only a single processor 100 and a single main memory 160 of a computing system are provided in FIG. 1. In examples provided, the processor 100 can execute cache instructions specifying a range of addresses of the main memory 160. Based on the range of addresses, the processor 100 can perform memory operations for the cache lines corresponding to the range of addresses, such as writing back data to the main memory 160. In this manner, the cache instructions enable the processor 100 to selectively write data from multiple cache lines to respective locations in the main memory 160.

In one example, FIG. 1 illustrates a processor 100 that includes a control module 110, a cache 120, a cache control 130, a register file 140, and execution units 150. The control module 110 can retrieve instructions from respective memory locations, translate/analyze the instructions, and determine how the processor 100 is to process the instructions. Depending on the instructions, the control module 110 can communicate with execution units 150 to direct the system to perform different operations and functions. In various implementations, instructions executed by the processor 100 can be stored in the cache 120, other cache memory resources accessible by the processor 100, and/or the main memory 160.

A cache 120 is a memory resource that enables the processor 100 to quickly access data from the cache 120, as opposed to data stored in the main memory 160. The cache 120 can store instructions and/or data that is fetched or retrieved from the main memory 160. Typically, the cache 120 can include a plurality of cache lines, where each cache line can have (i) a corresponding cache tag to reference an address in the main memory 160 that corresponds to the cache line, and (ii) a corresponding cache flag to indicate whether data in that cache line has been modified or updated by the processor 100. In some examples, the cache control 130 can maintain information about the tags and flags of the corresponding cache lines. The cache control 130 can, for example, include an array having entries that store tags and flags of the corresponding cache lines of the cache 120. Depending on implementation, the cache control 130 can be a separate component or be included as part of the cache 120.

The processor 100 can communicate, e.g., over a system bus, with the main memory 160, such as random access memory (RAM) or other dynamic storage device, and/or other memory resources (such as a hard drive of the system) for storing information and instructions to be executed by the processor 100. In different variations, the main memory 160 can be a non-volatile random access memory (NVRAM) and/or a volatile memory, such as DRAM, respectively, that can store instructions and data for a computer program(s) or application(s) that executes on the processor 100. The main memory 160 can also have memory locations specified by different addresses (e.g., each address having fixed length sequences or a plurality of address bits, such as twelve bits or thirty bits). For example, the main memory 160 can include a non-volatile memory having a first address range (e.g., from an address corresponding to 0 to an address corresponding to 3999) and a volatile memory having a second address range (e.g., from an address corresponding to 4000 to an address corresponding to 7999), such that the address ranges do not overlap. In systems where the main memory 160 includes non-volatile memory, there is a potential for retaining program or application state (e.g., data) in the non-volatile memory even during power failures or system crashes.

The processor 100 can also include a register file 140, which stores instructions and/or data provided by the cache 120 for processing by execution units 150. For example, the register file 140 can provide temporary storage for instructions and/or data that are to be processed by execution units 150. Execution units 150 can include, for example, an arithmetic logic unit (ALU) to perform computations and process data provided by the register file 140.

Instructions and/or data of an application(s) or a computer program(s) executing on the processor 100 can be stored in the main memory 160. The cache 120 can store, in a plurality of cache lines, instructions and/or data fetched from the main memory 160 during execution of the application(s). For example, when the processor references an address X of the main memory 160 for data, and there is a cache miss (e.g., the data corresponding to address X is not found in the cache 120), data from address X is retrieved or fetched from the main memory 160 and written into the cache 120 as a cache line. In this manner, the processor 100 can perform operations on the data stored in the cache 120, as opposed to having to access address X from the main memory 160. During operation of the application or computer program, the processor 100 can modify or update data in the cache 120, such as data corresponding to address X). When the processor 100 modifies or updates data in the cache 120, the flag or status of the cache line corresponding to the data is changed to indicate that the data is now "dirty." The status "dirty" represents that data in the main memory 160 is stale or inconsistent with the updated or modified data in the cache 120. In such cases, the "dirty" data can be written back to the main memory 160 (and/or concurrently delete the data from the cache 120, in some implementations) so that there is coherency with the data.

Typically, systems can implement a mechanism to flush the cache or write back data from the cache to main memory. Flushing the entire cache, however, can result in a significant delay to processing computation. In addition, if all data is written back from the cache to the main memory, irrelevant or unimportant data can be written back when such data may not be of interest after a system crash or power failure. Similarly, flushing individual cache lines one by one can also be expensive and consume a large amount of time.

In order to control the order and specify which data is to be written from the cache 120 to the main memory 160, the processor 100 can execute cache instructions that specify a range(s) of addresses of the main memory 160. The cache instructions specifying the range(s) of addresses can enable the processor 100 to cause data, such as application state information, that is stored in cache lines corresponding to those addresses in the range(s) to be written to the main memory 160.

Depending on implementation, the processor 100 can determine that at least a portion of data stored in the cache 120 is to be stored in or written back to the main memory 160. For example, as data is retrieved from the main memory 160 to the cache 120 for the processor 100 to access (e.g., when the processor 100 accesses memory and there is a cache miss), the cache 120 can become full. In order to retrieve and store more data in the cache 120, some of the data stored within the cache 120 needs to be written back to the main memory 160. The processor 100 can determine that some data from the cache 120 needs to be written back (e.g., without any explicit instruction) to the main memory 160 in order to enable new data to be stored in the cache 120.

In another example, the processor 100 can determine that at least a portion of data stored in the cache 120 is to be stored in or written back to the main memory 160 during execution of one or more programs. The processor 100 can make such a determination using cache instructions 111. The cache instructions 111 can instruct the processor 100 that data stored in certain cache lines needs to be written back to the main memory 160 in order to ensure that they survive a power failure or system crash. For example, the cache instructions 111 can be provided by one or more programs that are being executed by the processor 100. A program can provide the cache instructions 111 (e.g., periodically or intermittently, or based on a programmatic schedule) in order to ensure that data associated with the program, such as state information, is retained in the main memory 160 (e.g., NVRAM). In this manner, necessary information can be retained in the main memory 160 during an occurrence of a system crash.

When the processor 100 determines that at least a portion of data stored in the cache 120 is to be written back to the main memory 160, the control module 110 can use cache instructions 111 to determine one or more ranges of addresses of the main memory 160. The control module 110 can retrieve cache instructions 111 from the main memory 160 and/or from the cache 120 (and/or from other memory resources of system 100). For example, the cache instructions 111 can be written into the cache 120 at a previous instance in time. In addition, depending on variations, the cache 120 can also include an instruction cache and a data cache (for example, the cache instructions 111 can be written into the instruction cache of the cache 120). The cache instructions 111 can include address range(s) information or data in order to allow for a limited address range(s) to be specified for flushing or for writing back data to the main memory 160.

Depending on implementation, cache instructions 111 (to store or write back data from the cache 120 to the main memory 160) can specify one or more particular address ranges of the main memory 160 in different ways. For example, the cache instructions 111 can specify, for each address range, a beginning address and an end address that define that address range (e.g., for a first range, the beginning address is 001000 and the end address is 001111, while for a second range, the beginning address is 100100 and the end address is 111000). In another example, the cache instructions 111 can specify an address range by including information about a particular address or address pattern (e.g., such as 100000) and a mask (e.g., mask can be 111000). The addresses that match the particular address or address pattern in the bit positions specified by the mask can form the address range.

In other examples, the cache instructions 111 can specify an address range by including information about a particular address or address pattern (e.g., an address of a virtual page) and a mask. The mask may specify all bits except a number, n, of lower order bits. Such a mask can specify an address range containing a total number of 2ⁿ addresses. Among other benefits, specifying address range(s) in the cache instructions 111 by using a particular address and a mask for a set of high order bits can be easy to implement in the system described in FIG. 1.

The control module 110 can use the cache instructions 111 to determine one or more ranges of addresses of the main memory 160 having cached data that is to be written back. An address range of the main memory 160 can correspond to a plurality of cache lines in the cache 120 (e.g., a cache line in the cache 120 can correspond to an address in the main memory 160 provided that the processor 100 has accessed the contents of that address). If, for example, there are sixteen addresses in the specified range of addresses, and only seven of the addresses have been accessed by the processor 100, the cache 120 can store data in cache lines corresponding to the seven addresses (but not the other nine addresses). Based on the determined range(s) of addresses from the cache instructions 111, a set of cache lines can be identified that correspond to addresses that are in the determined range(s). In one example, because the number of cache lines storing data can be less than the number of addresses in the determined range(s) of addresses, the identified set of cache lines do not have to be contiguous or adjacent cache lines.

In one implementation, the control module 110 can provide address information 115 (e.g., the determined range(s) of addresses) to the cache 120, so that the cache 120 can identify a set of cache lines corresponding to the specified range(s) of addresses. For example, the mapping logic of the cache control 130 can correspond to or include a decoder to use the address information 115 in order to identify a set of cache lines that correspond to the range(s) of addresses. The set of cache lines corresponding to addresses in the range(s) of addresses is identified so that data stored in the identified set of cache lines can be written back to the main memory 160.

As an addition or an alternative, the control module 110 can include the mapping logic to use the address information 115 in order to identify the set of cache lines that correspond to the range(s) of addresses. The control module 110 can then provide information about the identified set of cache lines to the cache 120. In this manner, in either implementation, data can be copied or written back from cache lines (to the main memory 160) only if they correspond to a particular address in the range(s) of addresses. Among other benefits, the cache 120 can identify which cache lines are to be written back without having the processor 100 go through each cache line one by one.

The cache control 130 can determine which cache lines (from the identified set of cache lines) store data that needs to be stored in or written back to the main memory 160. The cache control 130 can use information about the tags and/or flags of corresponding cache lines, for example, to determine which cache lines of the identified set of cache lines have been flagged as "dirty." Cache lines that are flagged as "dirty," represent that data in those cache lines have been modified or updated, and therefore, need to be written back to the main memory 160 in order to maintain data coherency. For example, from the identified set of cache lines, the cache control 130 identifies each cache line that is determined as having data that has been modified since the data was first loaded to the cache 120 or since a previous store operation (in which data was written from that cache line to the main memory 160). The processor 100 causes the data 121 stored in those cache lines to be stored in or written back to the main memory 160. In this manner, processor 100 can cause data stored in multiple cache lines to be written back to respective addresses within the specified range(s) of addresses in the main memory 160.

Among other benefits, by using cache instructions 111 that specify range(s) of addresses, particular cache lines can be selected for writing back data to the main memory 160, as opposed to individually checking each cache line in the cache 120 to write back data or flushing the entire cache 120 (or writing back data in the entire cache 120) to the main memory 160. Furthermore, in systems where the main memory 160 includes both non-volatile memory (e.g., NVRAM) and volatile memory (DRAM), range(s) of addresses corresponding to only the non-volatile memory portion or the main memory 160 can be specified by the cache instructions 111. This allows for a store operation or write back operation to be distinguished between the non-volatile memory and the volatile memory. In addition, specifying address ranges can ensure that data, such as relevant application state information, stored in the cache 120 can be written to the appropriate locations of the non-volatile memory of the main memory 160 so that application state information can be retained in the event of a power failure or system crash.

Still further, using cache instructions 111 that specify range(s) of addresses enables the processor 100 to leverage information about cache lines that are already available to the cache 120. Because the cache control 130 maintains information about cache lines in the cache 120 (e.g., via tags and flags), the cache 120 does not have to perform lookups of individual cache lines. A set of cache lines can be identified from information provided about the range(s) of addresses, and the cache control 130 can use the flag status information (e.g., "dirty" or not) of the set of cache lines to determine which cache lines have data that needs to be written back to the main memory 160.

The cache instructions 111 can also enable one or more applications or computer programs that is executing on the processor 100 to control the order in which data stored in the cache 120, such as application state information, is to be written to the main memory 160. For example, instructions and/or data for an application that is executed by the processor 100 can be stored in the main memory 160 at particular locations or ranges of addresses. Because data stored in the cache 120 does not survive a power failure or system crash, during operation of the application, cache instructions 111 can specify that some data stored in the cache 120 corresponding to that application (e.g., more important data or application state data, etc.) should be written back to the main memory 160 before other data (e.g., less important data). The cache instructions 111 can specify the order in which the cached data that corresponds to the ranges of addresses (for that application) can be written back to the main memory 160 (e.g., write back data A by specifying an address range that includes an address for A before writing back data B).

In addition, in other examples, for multiple applications that are executing on the processor 100, the cache instructions 111 can specify the order in which cached data for the applications can be written back to the main memory 160. For example, the cache instructions 111 can specify the order by specifying the address range(s) for each of the applications (e.g., data corresponding to address ranges for App 1 to be written back first, before data corresponding to address ranges for App 2 is to be written back, etc.).

### METHODOLOGY

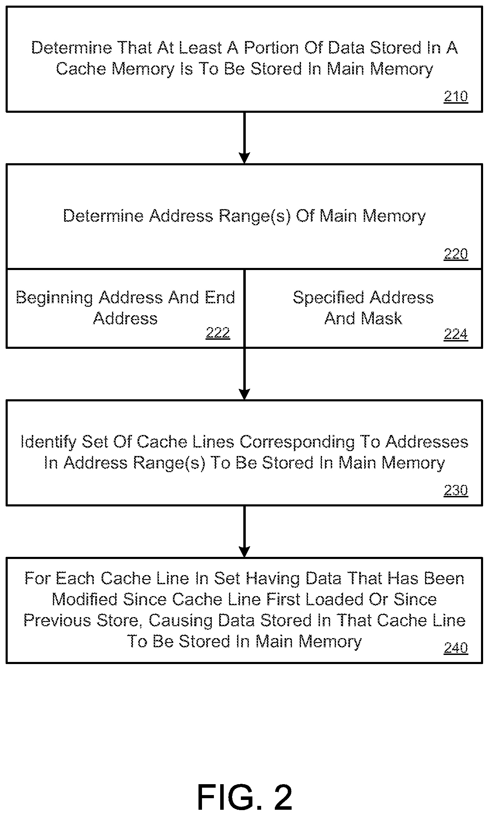

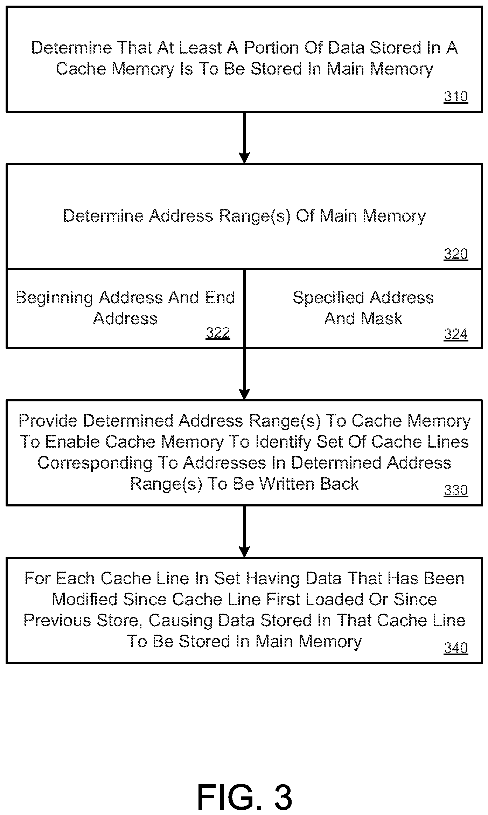

FIGS. 2 and 3 illustrate example methods for writing back data based on addresses of a main memory. The methods such as described by examples of FIGS. 2 and 3 can be implemented using, for example, components described with an example of FIG. 1. Accordingly, references made to elements of FIG. 1 are for purposes of illustrating a suitable element or component for performing a step or substep being described.

Referring to FIG. 2, a processor 100 determines that at least a portion of data stored in its cache 120 is to be stored in or written back to the main memory 160 (210). Such determinations can be made, for example, when new data has to be fetched from the main memory 160 and written to the cache 120, and/or based on cache instructions 111 that specify that data needs to be written from the cache 120 to the main memory 160.

The processor 100 can determine one or more ranges of addresses of the main memory 160 (220). In one example, the one or more ranges of addresses can be determined from the cache instructions provided to and executed by the processor 100. The cache instructions can specify that cache lines corresponding to addresses within the one or more ranges of addresses can have their data written back to the main memory 160. For example, the cache instructions 111 can specify, for each address range, a beginning address and an end address that define that address range (222). In other variations, the cache instructions 111 can specify an address range by including information about a particular address or address pattern, and a mask (224). The addresses that match the particular address or address pattern in the bit positions specified by the mask can form the address range. In another example, the mask can be specified to be a set of high order bits (n). The set of high order bits, n, can specify the address range to have a total number of addresses equal to 2ⁿ.

Based on the determined one or more ranges of addresses, a set of cache lines corresponding to addresses in the one or more ranges of addresses can be identified, so that data stored in the identified set of cache lines can be stored in or written to the main memory 160 (230). The set of cache lines can include two or more cache lines. In one example, the control module 110 can include a mapping logic that can correspond to or include a decoder that uses the address information (e.g., information about the determined one or more ranges of addresses) to identify the set of cache lines that correspond to the one or more ranges of addresses. For example a cache line in the set of cache lines can correspond to an address within the range(s) of addresses provided that the processor 100 has accessed the contents of that address.

Once the set of cache lines corresponding to the one or more ranges of addresses is identified, the processor can provide information about the identified set of cache lines to the cache 120. The cache control 130 of the cache 120 can look at the status flags associated with each of the cache lines of the set of cache lines in order to determine which cache lines of the identified set of cache lines have been flagged as "dirty." These cache lines from the set of cache lines have data that have been modified or updated, and therefore, need to be written back to the main memory 160 in order to maintain data coherency. For each cache line in the set of cache lines that has data that has been modified since that cache line was first loaded or since a previous store operation, data stored in that cache line is caused to be stored in or written back to the main memory 160 (240). The cached data can be written back to the respective addresses in the main memory 160.

FIG. 3 illustrates an example method for storing data based on addresses of a main memory. FIG. 3 is similar to FIG. 2 except that the processor does not identify the set of cache lines, but instead provides the determined one or more ranges of addresses to the cache 120.

For example, in FIG. 3, the processor 100 determines that at least a portion of data stored in its cache 120 is to be stored in or written back to the main memory 160 (310). The processor 100 can determine one or more ranges of addresses of the main memory 160, e.g., using information from the cache instructions (320). The cache instructions 111 can specify, for each address range, a beginning address and an end address that define that address range (322), or can specify an address range by including information about a particular address or address pattern, and a mask (324). The addresses that match the particular address or address pattern in the bit positions specified by the mask can form the address range. In some examples, the mask can be specified to be a set of high order bits (n), The set of high order bits, n, can specify the address range to have a total number of addresses equal to 2ⁿ.

The determined one or more ranges of addresses are provided to the cache 120 in order to enable the cache 120 to identify a set of cache lines corresponding to addresses in the one or more ranges of addresses, so that data stored in the identified set of cache lines can be stored in or written to the main memory 160 (330). For example, the control module 110 can provide address information (e.g., information about the determined one or more ranges of addresses) to the cache 120, so that the cache 120 can identify a set of cache lines corresponding to the specified range(s) of addresses. In one implementation, the cache control 130 can include a mapping logic that corresponds to or includes a decoder to use the address information in order to identify a set of cache lines that corresponds to the range(s) of addresses.

Similarly, for each cache line in the set of cache lines that has data that has been modified since that cache line was first loaded or since a previous store operation, data stored in that cache line is caused to be written back to the respective addresses in the main memory 160 (340).

## Claims

1. A method of performing memory operations, the method being performed by one or more processors (100) and comprising:
receiving, a cache instruction specifying one or more ranges of addresses of a main memory (160), the one or more ranges of addresses of the main memory (160) corresponding to a plurality of cache lines in a cache memory (120) of the one or more processors, wherein the cache instruction indicates that at least a portion of data stored in the cache memory (120) is to be stored in the main memory (160) wherein the cache instruction includes a particular address and a mask;
determining (220) the one or more ranges of addresses of the main memory based on determining which addresses match the particular address in bit positions specified by the mask;
identifying (230) a set of cache lines of the cache memory (120) based on the one or more ranges of addresses of the main memory (160), so that data stored in the identified set of cache lines of the cache memory can be stored in the main memory (160); and
for each cache line of the identified set having data that has been modified since that cache line was first loaded to the cache memory (120) or since a previous store operation, causing (240) data stored in that cache line to be stored in the main memory; and
wherein the main memory (160) corresponds to a non-volatile memory having a first address range and a volatile memory having a second address range, and wherein the determined one or more ranges of addresses is within the first address range.

2. The method of Claim 1, wherein determining (220) one or more ranges of addresses corresponding to a main memory (160) includes determining (222) a beginning address and an end address for each of the one or more ranges of addresses.

3. The method of Claim 1, wherein the mask is determined from a fixed predetermined set of masks.

4. The method of claim 1, wherein identifying the set of cache lines corresponding to addresses in the one or more range of addresses comprises: providing (330) the determined one or more addresses or one or more ranges of addresses to the cache memory to enable the cache memory to identify the set of cache lines corresponding to addresses, so that data stored in the identified set of cache lines of the cache memory can be stored in the main memory.

5. The method of Claim 1, wherein determining (220) one or more ranges of addresses corresponding to a main memory includes determining (222) a beginning address and an end address for each of the one or more ranges of addresses.

6. The method of Claim 1, wherein determining (220) one or more ranges of addresses corresponding to a main memory includes (i) determining (224) a particular address and a mask, and (ii) determining which addresses match the particular address in bit positions specified by the mask.

7. The method of Claim 6, wherein the mask is specified to be a set of high order bits.

8. A system comprising:
a main memory (160);
a processor (100) coupled to the main memory (160), the processor (100) including a cache memory (120), the processor configured to :
receive, a cache instruction specifying one or more ranges of addresses of the main memory (160), the one or more ranges of addresses of the main memory (160) corresponding to a plurality of cache lines in the cache memory (120), wherein the cache instruction indicates that at least a portion of data stored in the cache memory (120) is to be stored in the main memory (160) wherein the cache instruction includes a particular address and a mask;
determine (220) the one or more ranges of addresses of the main memory based on determining which addresses match the particular address in bit positions specified by the mask;
identify a set of cache lines based on the one or more ranges of addresses of the main memory (160), so that data stored in the identified set of cache lines of the cache memory can be stored in the main memory; and
for each cache line of the identified set having data that has been modified since that cache line was first loaded to the cache memory or since a previous store operation, cause data stored in that cache line to be stored in the main memory;
wherein the main memory (160) corresponds to a nonvolatile memory having a first address range and a volatile memory having a second address range, and wherein the determined one or more ranges of addresses is within the first address range.

## Patentansprüche

1. Verfahren zum Ausführen von Speicheroperationen, wobei das Verfahren von einem oder mehreren Prozessoren (100) ausgeführt wird und Folgendes umfasst:
Empfangen eines Cache-Befehls, der einen oder mehrere Adressbereiche eines Hauptspeichers (160) spezifiziert, wobei der eine oder die mehreren Adressbereiche des Hauptspeichers (160) einer Vielzahl von Cache-Zeilen in einem Cache-Speicher (120) des einen oder der mehreren Prozessoren entsprechen, wobei der Cache-Befehl anzeigt, dass mindestens ein Teil der im Cache-Speicher (120) gespeicherten Daten im Hauptspeicher (160) gespeichert werden soll, wobei der Cache-Befehl eine bestimmte Adresse und eine Maske beinhaltet;
Bestimmen (220) des einen oder der mehreren Adressbereiche des Hauptspeichers basierend auf dem Bestimmen, welche Adressen mit der jeweiligen Adresse in durch die Maske spezifizierten Bitpositionen übereinstimmen;
Identifizieren (230) eines Satzes von Cache-Zeilen des Cache-Speichers (120) basierend auf dem einen oder den mehreren Adressbereichen des Hauptspeichers (160), so dass in dem identifizierten Satz von Cache-Zeilen des Cache-Speichers gespeicherte Daten im Hauptspeicher (160) gespeichert werden können; und
für jede Cache-Zeile des identifizierten Satzes, die Daten aufweist, die geändert wurden, seit diese Cache-Zeile zum ersten Mal in den Cache-Speicher (120) geladen wurde, oder seit einem früheren Speichervorgang, Bewirken (240), dass die in dieser Cache-Zeile gespeicherten Daten im Hauptspeicher gespeichert werden; und
wobei der Hauptspeicher (160) einem nichtflüchtigen Speicher mit einem ersten Adressbereich und einem flüchtigen Speicher mit einem zweiten Adressbereich entspricht und wobei der bestimmte eine oder die bestimmten mehreren Adressbereiche innerhalb des ersten Adressbereichs liegen.

2. Verfahren nach Anspruch 1, wobei das Bestimmen (220) eines oder mehrerer Adressbereiche, die einem Hauptspeicher (160) entsprechen, das Bestimmen (222) einer Anfangsadresse und einer Endadresse für jeden des einen oder der mehreren Adressbereiche beinhaltet.

3. Verfahren nach Anspruch 1, wobei die Maske aus einem fest vorgegebenen Satz von Masken bestimmt wird.

4. Verfahren nach Anspruch 1, wobei das Identifizieren des Satzes von Cache-Zeilen, die Adressen in dem einen oder den mehreren Adressbereich entsprechen, Folgendes umfasst:
Bereitstellen (330) der bestimmten einen oder mehreren Adressen oder eines oder mehrerer Adressbereiche an den Cache-Speicher, sodass der Cache-Speicher den Satz von Cache-Zeilen identifizieren kann, die Adressen entsprechen, damit die in dem identifizierten Satz von Cache-Zeilen des Cache-Speichers gespeicherten Daten im Hauptspeicher gespeichert werden können.

5. Verfahren nach Anspruch 1, wobei das Bestimmen (220) eines oder mehrerer Adressbereiche, die einem Hauptspeicher entsprechen, das Bestimmen (222) einer Anfangsadresse und einer Endadresse für jeden des einen oder der mehreren Adressbereiche beinhaltet.

6. Verfahren nach Anspruch 1, wobei das Bestimmen (220) eines oder mehrerer Adressbereiche, die einem Hauptspeicher entsprechen, (i) das Bestimmen (224) einer bestimmten Adresse und einer Maske sowie (ii) das Bestimmen, welche Adressen mit der betreffenden Adresse in durch die Maske spezifizierten Bitpositionen übereinstimmen, umfasst.

7. Verfahren nach Anspruch 6, wobei die Maske als ein Satz von Bits hoher Ordnung spezifiziert ist.

8. System, Folgendes umfassend:
einen Hauptspeicher (160);
einen Prozessor (100), der mit dem Hauptspeicher (160) gekoppelt ist, wobei der Prozessor (100) einen Cache-Speicher (120) enthält, wobei der Prozessor für folgende Zwecke konfiguriert ist:
Empfangen eines Cache-Befehls, der einen oder mehrere Adressbereiche des Hauptspeichers (160) spezifiziert, wobei der eine oder die mehreren Adressbereiche des Hauptspeichers (160) einer Vielzahl von Cache-Zeilen im Cache-Speicher (120) entsprechen, wobei der Cache-Befehl anzeigt, dass mindestens ein Teil der im Cache-Speicher (120) gespeicherten Daten im Hauptspeicher (160) gespeichert werden soll, wobei der Cache-Befehl eine bestimmte Adresse und eine Maske beinhaltet;
Bestimmen (220) des einen oder der mehreren Adressbereiche des Hauptspeichers basierend auf dem Bestimmen, welche Adressen mit der bestimmten Adresse in Bitpositionen übereinstimmen, die durch die Maske spezifiziert sind;
Identifizieren eines Satzes von Cache-Zeilen basierend auf dem einen oder den mehreren Adressbereichen des Hauptspeichers (160), so dass Daten, die in dem identifizierten Satz von Cache-Zeilen des Cache-Speichers gespeichert sind, im Hauptspeicher gespeichert werden können; und
für jede Cache-Zeile des identifizierten Satzes, die Daten aufweist, die seit dem ersten Laden dieser Cache-Zeile in den Cache-Speicher oder seit einem früheren Speichervorgang geändert wurden, Bewirken, dass die in dieser Cache-Zeile gespeicherten Daten im Hauptspeicher gespeichert werden;
wobei der Hauptspeicher (160) einem nichtflüchtigen Speicher mit einem ersten Adressbereich sowie einem flüchtigen Speicher mit einem zweiten Adressbereich entspricht und wobei der bestimmte eine oder die bestimmten mehreren Adressbereiche innerhalb des ersten Adressbereichs liegen.

## Revendications

1. Procédé de réalisation d'opérations de mémoire, le procédé étant exécuté par un ou plusieurs processeurs (100) et comprenant :
la réception d'une instruction de cache spécifiant une ou plusieurs plages d'adresses d'une mémoire principale (160), les une ou plusieurs plages d'adresses de la mémoire principale (160) correspondant à une pluralité de lignes de cache dans une mémoire cache (120) des un ou plusieurs processeurs, l'instruction de cache indiquant qu'au moins une partie des données stockées dans la mémoire cache (120) doit être stockée dans la mémoire principale (160), l'instruction de cache comportant une adresse particulière et un masque ;
la détermination (220) des une ou plusieurs plages d'adresses de la mémoire principale sur la base de la détermination des adresses qui correspondent à l'adresse particulière dans des positions binaires spécifiées par le masque ;
l'identification (230) d'un ensemble de lignes de cache de la mémoire cache (120) sur la base des une ou plusieurs plages d'adresses de la mémoire principale (160), de sorte que les données stockées dans l'ensemble identifié de lignes de cache de la mémoire cache peuvent être stockées dans la mémoire principale (160) ; et
pour chaque ligne de cache de l'ensemble identifié dont les données ont été modifiées depuis que cette ligne de cache a été chargée pour la première fois dans la mémoire cache (120) ou depuis une opération de stockage précédente, le fait d'amener les données (240) stockées dans cette ligne de cache à être stockées dans la mémoire principale ; et
la mémoire principale (160) correspondant à une mémoire non volatile ayant une première plage d'adresses et une mémoire volatile ayant une seconde plage d'adresses, et les une ou plusieurs plages d'adresses déterminées se trouvant dans la première plage d'adresses.

2. Procédé selon la revendication 1, dans lequel la détermination (220) d'une ou de plusieurs plages d'adresses correspondant à une mémoire principale (160) comporte la détermination (222) d'une adresse de début et d'une adresse de fin pour chacune des une ou plusieurs plages d'adresses.

3. Procédé selon la revendication 1, dans lequel le masque est déterminé à partir d'un ensemble fixe prédéterminé de masques.

4. Procédé selon la revendication 1, dans lequel l'identification de l'ensemble de lignes de cache correspondant à des adresses dans les une ou plusieurs plages d'adresses comprend :
la fourniture (330) des une ou plusieurs adresses déterminées ou des une ou plusieurs plages d'adresses déterminées à la mémoire cache afin de permettre à la mémoire cache d'identifier l'ensemble de lignes de cache correspondant à des adresses, de sorte que les données stockées dans l'ensemble identifié de lignes de cache de la mémoire cache peuvent être stockées dans la mémoire principale.

5. Procédé selon la revendication 1, dans lequel la détermination (220) d'une ou de plusieurs plages d'adresses correspondant à une mémoire principale comporte la détermination (222) d'une adresse de début et d'une adresse de fin pour chacune des une ou plusieurs plages d'adresses.

6. Procédé selon la revendication 1, dans lequel la détermination (220) d'une ou de plusieurs plages d'adresses correspondant à une mémoire principale comporte (i) la détermination (224) d'une adresse particulière et d'un masque, et (ii) la détermination d'adresses correspondant à l'adresse particulière dans des positions binaires spécifiées par le masque.

7. Procédé selon la revendication 6, dans lequel le masque est spécifié comme étant un ensemble de bits d'ordre supérieur.

8. Système, comprenant :
une mémoire principale (160) ;
un processeur (100) couplé à la mémoire principale (160), le processeur (100) comportant une mémoire cache (120), le processeur étant configuré pour :
recevoir une instruction de cache spécifiant une ou plusieurs plages d'adresses de la mémoire principale (160), les une ou plusieurs plages d'adresses de la mémoire principale (160) correspondant à une pluralité de lignes de cache dans la mémoire cache (120), l'instruction de cache indiquant qu'au moins une partie des données stockées dans la mémoire cache (120) doit être stockée dans la mémoire principale (160), l'instruction de cache comportant une adresse particulière et un masque ;
déterminer (220) les une ou plusieurs plages d'adresses de la mémoire principale sur la base de la détermination des adresses qui correspondent à l'adresse particulière dans des positions binaires spécifiées par le masque ;
identifier un ensemble de lignes de cache sur la base des une ou plusieurs plages d'adresses de la mémoire principale (160), de sorte que les données stockées dans l'ensemble identifié de lignes de cache de la mémoire cache peuvent être stockées dans la mémoire principale ; et
pour chaque ligne de cache de l'ensemble identifié dont les données ont été modifiées depuis que cette ligne de cache a été chargée pour la première fois dans la mémoire ou depuis une opération de stockage précédente, amener les données stockées dans cette ligne de cache à être stockées dans la mémoire principale ;
la mémoire principale (160) correspondant à une mémoire non volatile ayant une première plage d'adresses et une mémoire volatile ayant une seconde plage d'adresses, et les une ou plusieurs plages d'adresses déterminées se trouvant dans la première plage d'adresses.
